# EUROPEAN PATENT SPECIFICATION

(11) **EP 0 444 349 B1**
(45) Date of publication and mention of the grant of the patent: **02.06.1993**
(21) Application number: 90313528.3
(22) Date of filing: 12.12.1990
(51) Int. Cl.: H01R 43/00

(54) **Cleaning device for pins and pin sockets**
Gerät zum Reinigen von Stiften und Hülsen
Dispositif de nettoyage des broches et des douilles

(30) Priority: 27.02.1990 GB 9004405
(43) Date of publication of application: 04.09.1991
(73) Proprietor: Snelling, Roger Leslie, Diss, Norfolk IP22 2EH (GB)
(72) Inventor: Snelling, Roger Leslie, Diss, Norfolk IP22 2EH (GB)
(74) Representative: Stone, Patrick

(56) References cited:
- EP-A- 0 115 784
- DE-A- 1 540 065
- US-A- 3 295 872

## Description

This invention relates to a device for cleaning electrical pins and pin sockets, for example as provided in electrical coupling units between towing and towed vehicles, and more especially pins and pin sockets which are of unsprung, i.e. unsplit, solid construction. Devices for cleaning pins and pin sockets are known e.g. from DE-A-1540065 and EP-A-0115784.

According to one aspect of the invention, there is provided an element having a main part to be gripped by the fingers and a cylindrical end part in the form of a helical spring one end of which is fixed against rotation relative to said main part, the spring being substantially of a predetermined diameter for insertion into an electrical pin socket with a rotational twisting action in a sense to wind the spring, whereby the spring diametrically contracts sufficiently to enter the socket and bind against the surface thereof with a cleaning action as it rotates.

According to another aspect of the invention, there is provided an element having a main part to be gripped by the fingers and a hollow end part in the form of a helical spring one end of which is fixed against rotation relative to said main part, the spring being internally of a predetermined diameter for location over an electrical pin with a rotational twisting action in a sense to unwind the spring, whereby the spring diametrically expands sufficiently to engage over the pin and bind against the surface thereof with a cleaning action as it rotates.

The device may conveniently be an elongate cleaning element having a helical spring pin cleaning part at one end and a helical spring pin socket cleaning part at the other end.

More commonly, however, a helical spring cleaner will only be required at one of the two end parts, because commonly electrical coupling units employ either sprung, i.e. split, pins or sprung, i.e. split, pin sockets, but not both, for ensuring tight pin/socket engagement. Where a sprung pin or sprung pin socket is provided, it is usually sufficient to provide the cleaning surface on an end spigot, either internally or externally, either as an integral or applied surface finish. The helical spring cleaner of this invention is especially useful for cleaning solid pins and/or pin sockets. For cleaning pin sockets, a solid end spigot is most desirably provided to support the helical spring, even when the spigot does not iself perform the cleaning action, because the helical spring can then be fixed at its outer end. Analogously, for cleaning pins, a hollow spigot is more desirably provided to receive the helical spring within it, so that again the helical spring can be fixed at its outer end. However, it is possible, for cleaning either pins or pin sockets, to employ a free standing spring fixed at its inner end to one end of the main part of the device. Moreover, even when a supporting spigot is provided, as is preferable, the helical spring can alternatively be fixed at its inner end.

Coupling units between towing and towed vehicles are necessarily located in exposed conditions at the rear of the towing vehicle and front of the towed vehicle and are therefore extremely prone to ingress of dirt, moisture, dust and grease, making the electrical pins and sockets dirty and/or corroded and therefore giving rise to impaired electrical contact. This is especially significant because the electrical system involved is commonly a 12 V d.c. system which nevertheless involves passage of relatively high current. Proportionately, therefore, a relatively high loss of electrical power can be caused by impaired electrical contact between pins and sockets. The present invention is especially but not exclusively useful for cleaning pins and pin sockets in such coupling units. Thus, the cleaning device of the invention is useful for cleaning any electrical plug and socket arrangement using round sockets and round pins, especially in low voltage, high current systems. An example of such an alternative application is the jack and jack plug arrangement commonly employed in telecommunication systems.

Pins and pin sockets are often made of brass or other relatively soft highly electrically conductive metal. In this invention, the main body of the device supporting the helical spring is preferably made of mild steel coated with bright zinc having a passivated finish. Where one cleaning surface is provided on an end spigot, this surface (internal or external) can be profiled, as by rough machining, in order to achieve an abrasive finish.

The helical spring at one end of the device is preferably made of high carbon steel, and could possibly be coated with an abrasive such as diamond dust. However, the spring could alternatively be made of another suitable spring material, for example which is non-magnetic and non-rusting, such as phosphor-bronze. It would also be possible, if desired, similarly to coat the internal or external surface of the spigot at the other end of the device, in order to provide an abrasive finish giving a faster cleaning action.

A cleaning device in accordance with the invention is exemplified with reference to the accompanying drawings, in which:-
- Figure 1: shows an exmple of an electrical coupling part having pins and sockets to be cleaned by the device;
- Figure 2: shows a device having a helical spring for cleaning a pin socket;
- Figure 3: shows part of the device in enlargement;
- Figure 4: shows a device having a helical spring for cleaning a pin;
- Figure 5: shows part of the device in enlargement; and
- Figure 6: shows a modification of the device.

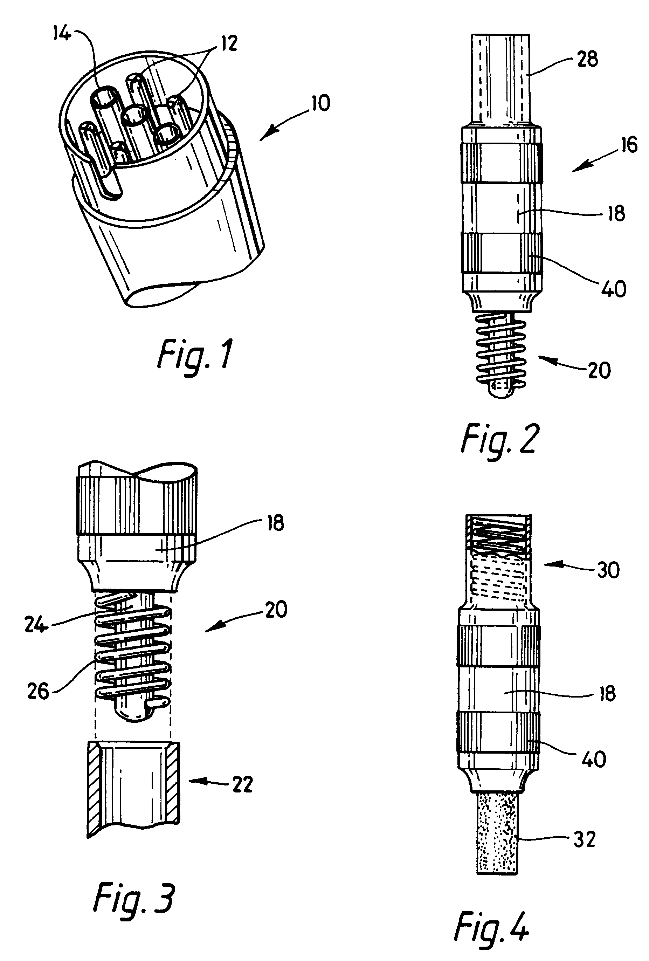

In Figure 1 there is shown an example of an electrical coupling part having pins and sockets which can be cleaned by the device of the invention, in particular the device illustrated in Figure 2. This coupling part 10 incorporates a plurality of split pins 12 and solid sockets 14. The part which couples with the part 10 also has split pins and solid sockets. However, other coupling units are known the respective parts of which have solid pins and split sockets, and these can be cleaned by the cleaning device illustrated in Figure 4.

Referring now to Figure 2, there is shown a cleaning device in the form of an elongate element 16 having a main part 18 and an end part 20 constituted by a cleaning device in the form of a helical spring.

The end part 20 shown in Figure 2, and in enlargement in Figure 3, is intended for cleaning electrical pin sockets, such as the socket 22, which can be considered to represent one of the pin sockets 14 of Figure 1. The main part 18 of the cleaning device is integrally formed with a solid end spigot 24 around which is mounted a helical spring 26 having an inturned end engaged through a diametrical slot in the outer end of the spigot, which has then been staked, thereby to fix the helical spring against rotation at its outer end.

At the other end of the device of Figure 2 is provided a hollow spigot 28. The spigot 28 has an internal surface which is roughly drilled to provide a profiled finish, enabling the hollow spigot to be used for cleaning split pins, such as the pins 12 of Figure 1.

The device shown in Figure 4 is intended for cleaning a coupling part having solid pins and split sockets. Thus, it has an end part 30 with an internal helical spring, and a spigot 32 with a profiled external surface at its other end.

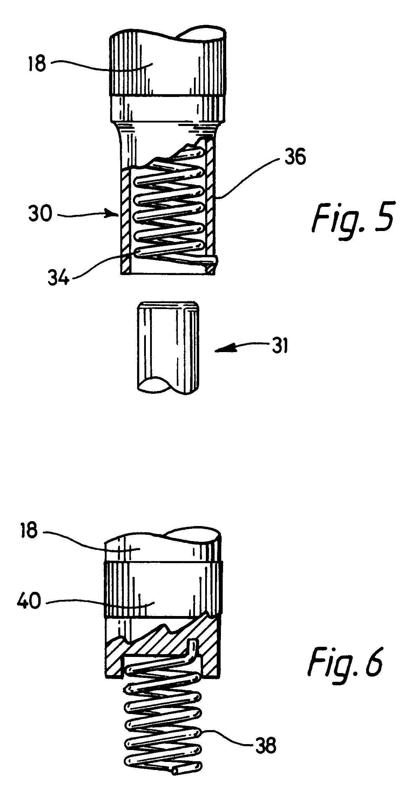

The end part 30 shown in enlargement in Figure 5 for cleaning a solid pin 31, has a helical spring 34 located and fixed at its outer end within a drilled hollow spigot 36 on the main part 18. The outer end of the spring may be fixed by locating an out-turned end of the spring through a hole or slot in the spigot wall at the outer end of the spigot, and subsequent staking and smoothing.

The arrangement of Figure 6 may be designed for cleaning electrical pins or pin sockets, dependent on the diameter of the helical spring 38, which is fixed at its inner end within a shallow circular recess machined in the end face of the main part 18. Thus, this arrangement differs from the arrangements of Figures 2 and 4 primarily in the omission of an end spigot for supporting the spring. In practice, however, such support is not essential, although preferred.

In all arrangements, the diameter of the spring 26, 34 or 38 relative to the diameter of the pin or socket to be cleaned is most important. In the case of a pin socket to be cleaned, as in Figure 3, the external diameter of the spring should be slightly larger than the internal diameter of the socket. Thus, when inserted into the socket with a rotational twisting action, the spring, being fixed at one end only, will tend to wind, reducing its diameter to facilitate continued entry into the socket whilst binding against the socket with an abrasing cleaning action as the rotational twisting action is continued. The converse applies to Figure 5, where a pin is to be cleaned. Here, the internal diameter of the spring is required to be slightly less than the external diameter of the pin, so that the spring is caused to unwind slightly when forced over the pin with a rotational twisting action. Either one or the other of the above-described dimensional relationships also applies in the arrangement of Figure 6.

Analogously, for cleaning sprung, i.e. split, pins or sockets, the internal or external surface of the spigot 28 or 32, which carries the abrasive finish, is likewise chosen to be very slightly smaller or greater in diameter than that of the pin or socket.

In all embodiments, the main part 18 of the device is knurled at 40 to facilitate gripping with the fingers.

It will be appreciated that various modifications of the above-described and illustrated arrangements are possible within the scope of the invention. For example, in the embodiments of Figures 2 and 3 and of Figures 4 and 5, it is possible to fix the inner end of the helical spring against rotation, as for example by means of an epoxy resin adhesive, instead of the outer end.

## Claims

1. A device for cleaning electrical pin sockets, comprising an element having a main part (18) to be gripped by the fingers and a cylindrical end part (20) in the form of a helical spring (26) one end of which is fixed against rotation relative to said main part, the spring being substantially of a predetermined diameter for insertion into an electrical pin socket (22) with a rotational twisting action in a sense to wind the spring, whereby the spring diametrically contracts sufficiently to enter the socket and bind against the surface thereof with a cleaning action as it rotates. (Figure 3)

2. A device for cleaning electrical pins, comprising an element having a main part (18) to be gripped by the fingers and a hollow end part (30) in the form of a helical spring (34) one end of which is fixed against rotation relative to said main part, the spring being internally of a predetermined diameter for location over an electrical pin (31) with a rotational twisting action in a sense to unwind the spring, whereby the spring diametrically expands sufficiently to engage over the pin and bind against the surface thereof with a cleaning action as it rotates. (Figure 5)

3. A device as claimed in claims 1 and 2, comprising an elongate cleaning element having a pin socket cleaning part in the form of a helical spring (26) at one end and pin cleaning part in the form of a helical spring (34) at the other end.

4. A device as claimed in claim 1 or claim 2, having a helical spring cleaning part (20 or 30) at one end and an end spigot (28 or 32) having an internal or external cleaning surface at the other end.

5. A device as claimed in claim 4, in which the cleaning surface of the spigot is profiled to impart an abrasive finish.

6. A device as claimed in any of claims 1 to 5, wherein the helical spring (26 or 34) is supported by an end spigot (24 or 36) on the element, the spring being fixed against rotation at the inner or the outer end of said spigot.

7. A device as claimed in any of claims 1 to 6, wherein the main body of the element is made of mild steel and the helical spring or each such spring is made of tempered steel.

8. A device as claimed in any of claims 1 to 7, wherein the or each helical spring or the cleaning surface is dimensioned for cleaning the electrical pins and/or sockets of electrical coupling devices of the kind operative between towing and towed vehicles.

## Patentansprüche

1. Vorrichtung zum Reinigen von elektrischen Stiftsockeln, mit einem Element mit einem Hauptteil (18), das mit den Fingern erfaßt wird, und einem zylindrischen Endteil (20) in Form einer Wendelfeder (26), deren eines Ende drehfest relativ zum Hauptteil angeordnet ist und die im wesentlichen einen vorbestimmten Durchmesser zum Einführen in einen elektrischen Stiftsockel (22) mit einem Dreh-Torsionsvorgang in einem die Feder aufwickelnden Sinn aufweist, wobei die Feder sich diametral soweit zusammenzieht, daß der Sockel eingeführt werden kann und beim Drehen eine Reinigungswirkung ausübend seine Oberfläche eng umschließt. (Fig. 3)

2. Vorrichtung zum Reinigen von elektrischen Stiften, mit einem Element mit einem Hauptteil (18), das mit den Fingern erfaßt wird, und einem hohlen Endteil (30) in Form einer Wendelfeder (34), deren eines Ende drehfest relativ zum Hauptteil angeordnet ist, und die einen vorbestimmten Innenurchmesser zur Positionierung über einem elektrischen Stift (31) mit einer Dreh-Torsionswirkung in einem die Feder abwickelnden Sinn hat, wobei die Feder diametral soweit expandiert, daß sie in Eingriff über dem Stift kommt und beim Drehen eine Reinigungswirkung ausübend seine Oberfläche eng umschließt. (Fig. 5)

3. Vorrichtung nach Anspruch 1 und 2, mit einem länglichen Reinigungselement, das einen den Stiftsockel reinigenden Teil in Form einer Wendelfeder (26) am einen Ende und einen den Stift reinigenden Teil in Form einer Wendelfeder (34) am anderen Ende aufweist.

4. Vorrichtung nach Anspruch 1 oder 2, mit einem Wendelfeder-Reinigungsteil (20 oder 30) am einen Ende und einem Endzapfen (28 oder 32) mit einer inneren oder äußeren Reinigungsfläche am anderen Ende.

5. Vorrichtung nach Anspruch 4, bei der die Reinigungsfläche des Zapfens profiliert ist, um ein Abrieb-Finish zu erzielen.

6. Vorrichtung nach einem der Ansprüche 1 - 5, bei der die Wendelfeder (26 oder 34) durch einen Endzapfen (24 oder 36) auf dem Element abgestützt und drehfest am inneren oder äußeren Ende des Zapfens angeordnet ist.

7. Vorrichtung nach einem der Ansprüche 1 - 6, bei der der Hauptkörper des Elementes aus Flußstahl und die Wendelfeder oder jede solche Feder aus gehärtetem Stahl besteht.

8. Vorrichtung nach einem der Ansprüche 1 - 7, bei der die oder jede Wendelfeder oder die Reinigungsfläche für das Reinigen der elektrischen Stifte und/oder Sockel von elektrischen Kupplungen, wie sie zwischen abschleppenden und abgeschleppten Fahrzeugen verwendet werden, dimensioniert ist.

## Revendications

1. Dispositif pour nettoyer des fiches électriques femelles, comprenant un élément ayant une partie principale (18) à saisir avec les doigts et une partie d'extrémité cylindrique (20) se présentant sous la forme d'un ressort hélicoïdal (26) dont une extrémité est fixée de façon à ne pas pouvoir tourner par rapport à ladite partie principale, le ressort ayant sensiblement un diamètre prédéterminé pour être introduit dans une fiche électrique femelle (22) avec un mouvement tournant de torsion dans le sens de l'enroulement du ressort, grâce à quoi le ressort se resserre suffisamment dans le sens de son diamètre pour entrer dans la fiche femelle et être calé contre la surface de celle-ci en exerçant une action de nettoyage au fur et à mesure qu'il tourne. (Figure 3)

2. Dispositif pour nettoyer des broches électriques, comprenant un élément ayant une partie principale (18) à saisir avec les doigts et une partie d'extrémité creuse (30) se présentant sous la forme d'un ressort hélicoïdal (34) dont une extrémité est fixée de façon à ne pas pouvoir tourner par rapport à ladite partie principale, le ressort ayant un diamètre intérieur prédéterminé pour être placé sur une broche électrique (31) avec un mouvement tournant de torsion dans le sens du déroulement du ressort, grâce à quoi le ressort s'élargit suffisamment dans le sens de son diamètre pour s'engager sur la broche et se caler contre la surface de celle-ci, en exerçant une action de nettoyage au fur et à mesure qu'il tourne. (Figure 5)

3. Dispositif selon les revendications 1 et 2, comprenant un élément de nettoyage allongé ayant à une première extrémité une partie se présentant sous la forme d'un ressort hélicoïdal (26) pour nettoyer une fiche femelle et, à l'autre extrémité, une partie se présentant sous la forme d'un ressort hélicoïdal (34) pour nettoyer une broche.

4. Dispositif selon la revendication 1 ou 2, ayant à une première extrémité une partie de nettoyage (20 ou 30) à ressort hélicoïdal et, à l'autre extrémité, une tige d'extrémité (28 ou 32) ayant une surface de nettoyage interne ou externe.

5. Dispositif selon la revendication 4, dans lequel la surface de nettoyage de la tige est profilée pour donner un fini abrasif.

6. Dispositif selon l'une quelconque des données 1 à 5, dans lequel le ressort hélicoïdal (26 ou 34) est supporté par une tige d'extrémité (24 ou 36) présente sur l'élément, le ressort étant fixé pour ne pas pouvoir tourner à l'extrémité interne ou externe de ladite tige.

7. Dispositif selon l'une quelconque des revendications 1 à 6, dans lequel le corps principal de l'élément est en acier doux et le ressort hélicoïdal ou chaque ressort de ce type est en acier trempé.

8. Dispositif selon l'une quelconque des revendications 1 à 7, dans lequel le ou chaque ressort hélicoïdal ou la surface de nettoyage est dimensionné pour nettoyer les broches et/ou fiches électriques de dispositifs de raccordement électrique du type servant entre des véhicules remorqueurs et remorqués.
